(19) Europäisches Patentamt / European Patent Office / Office européen des brevets

(11) **EP 4 212 762 A1**

(12) **EUROPEAN PATENT APPLICATION**
published in accordance with Art. 153(4) EPC

(43) Date of publication:
**19.07.2023 Bulletin 2023/29**

(21) Application number: **21866317.7**

(22) Date of filing: **14.06.2021**

(51) International Patent Classification (IPC):
**F16J 15/10** (2006.01)   **H01M 50/107** (2021.01)
**H01M 50/184** (2021.01)   **H01M 50/19** (2021.01)

(52) Cooperative Patent Classification (CPC):
**F16J 15/10; H01M 50/107; H01M 50/183; H01M 50/184; H01M 50/19;** Y02E 60/10

(86) International application number:
**PCT/JP2021/022452**

(87) International publication number:
**WO 2022/054356 (17.03.2022 Gazette 2022/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.09.2020 JP 2020152461**

(71) Applicant: DAIKIN INDUSTRIES, LTD.
**Osaka-shi, Osaka 530-0001 (JP)**

(72) Inventors:
• **USHIJIMA, Takeru**
  **Osaka-shi, Osaka 530-8323 (JP)**

• **YANAGIGUCHI, Tomihiko**
  **Osaka-shi, Osaka 530-8323 (JP)**
• **AOYAMA, Takahisa**
  **Osaka-shi, Osaka 530-8323 (JP)**
• **LIU, Jihong**
  **Osaka-shi, Osaka 530-8323 (JP)**
• **SUKEGAWA, Masamichi**
  **Osaka-shi, Osaka 530-8323 (JP)**
• **TSUDA, Hayato**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**

(54) **SEALING MEMBER AND CYLINDRICAL LITHIUM ION BATTERY**

(57)    A sealing member that is unlikely to break while an end portion thereof is pressure-bonded is provided.

The sealing member is one used for a cylindrical lithium-ion battery, wherein the sealing member is used by being interposed between a bottom-closed cylindrical case and a cap, is made of perfluoropolymer, and has dimensions that meet the following relational expressions:

when an axial distance from a cap upper surface to a leading end portion in a case is defined as HC,

an axial distance from the cap upper surface to a leading end portion in the sealing member is defined as HG,

a thickness of the sealing member is defined as TG,

a value of TG divided by HG is defined as X (=TG/HG), and

a value of HG divided by HC is defined as Y (=HG/HC),

$$X > 0.800TG - 0.324 \quad (1)$$

$$Y < -0.778TG + 1.670 \quad (2)$$

$$Y > 0.594X^2 - 1.176X + 0.913 \quad (3).$$

**(Cont. next page)**

FIG. 9

**Description**

Technical Field

This disclosure relates to a sealing member and a cylindrical lithium-ion battery.

Background Art

A cylindrical lithium-ion battery needs to be provided with a sealing member between its bottom-closed cylindrical case and cap. It is known that perfluoropolymer can be used for such a sealing member. In battery manufacturing, a process of pressure-bonding an end portion with a jig is performed (Patent Literatures 1 to 4).

Citation List

Patent Literature

Patent Literature 1: Japanese Patent Laid-Open No. 2010-282824
Patent Literature 2: Japanese Patent Laid-Open No. 2001-28259
Patent Literature 3: Japanese Translation of PCT International Application Publication No. 2014-524118
Patent Literature 4: Japanese Patent Laid-Open No. 2001-313011

Summary of Invention

Technical Problem

This disclosure aims to provide a sealing member that is unlikely to break while an end portion thereof is pressure-bonded.

Solution to Problem

Disclosed herein is a sealing member used for a cylindrical lithium-ion battery, wherein the sealing member is used by being interposed between a bottom-closed cylindrical case and a cap, is made of perfluoropolymer, and has dimensions that meet the following relational expressions:

when an axial distance from a cap upper surface to a leading end portion in a case is defined as HC,
an axial distance from the cap upper surface to a leading end portion in the sealing member is defined as HG,
a thickness of the sealing member is defined as TG,
a value of TG divided by HG is defined as X (=TG/HG), and
a value of HG divided by HC is defined as Y (=HG/HC),

$$X > 0.800TG - 0.324 \quad (1)$$

$$Y < -0.778TG + 1.670 \quad (2)$$

$$Y > 0.594X^2 - 1.176X + 0.913 \quad (3).$$

It is preferable that the perfluoropolymer have a tensile strength equal to or higher than 32 MPa.
Also disclosed herein is a cylindrical lithium-ion battery having a structure in which the above-described sealing member is used by being interposed between a bottom-closed cylindrical case and a cap and pressure-bonded by being bent at an upper end of the case.

Advantageous Effects of Invention

By having a specific shape, the sealing member of this disclosure can achieve a reduction in the rate of getting damaged while an end portion thereof is pressure-bonded, thus contributing to improving the production yield.

Brief Description of Drawings

[Figure 1] Figure 1 is a schematic view showing a state before pressure-bonding is performed in a lithium-ion battery of this disclosure.
[Figure 2] Figure 2 is a schematic view showing pressure-bonding in the lithium-ion battery of this disclosure.
[Figure 3] Figure 3 is a sectional view showing deformation of a sealing member of this disclosure resulting from pressure-bonding.
[Figure 4] Figure 4 is a schematic view showing the definition of each of a sealing member height HG, a case height HC, and a sealing member thickness TG in this disclosure.
[Figure 5] Figure 5 is a graph showing relations between maximum stresses and X obtained by simulation.
[Figure 6] Figure 6 is a graph showing a relation between X and TG obtained by simulation.
[Figure 7] Figure 7 is a graph showing relations between maximum stresses and Y obtained by simulation.
[Figure 8] Figure 8 is a graph showing a relation between Y and TG obtained by simulation.
[Figure 9] Figure 9 is a graph showing suitable ranges specified by this disclosure.
[Figure 10] Figure 10 is a view showing suitable ranges specified by a more suitable aspect of this disclosure.
[Figure 11] Figure 11 is a graph showing suitable ranges specified by a more suitable aspect of this disclosure.

Description of Embodiments

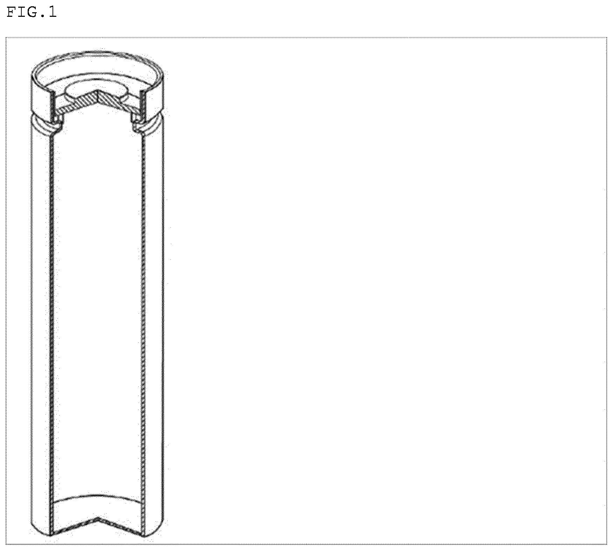

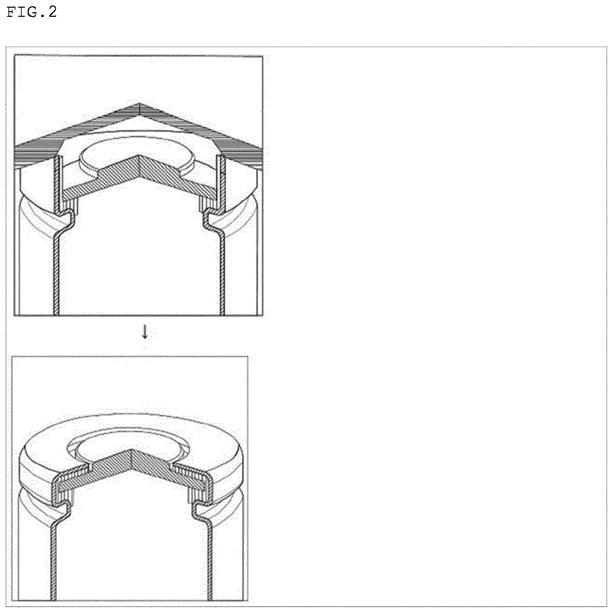

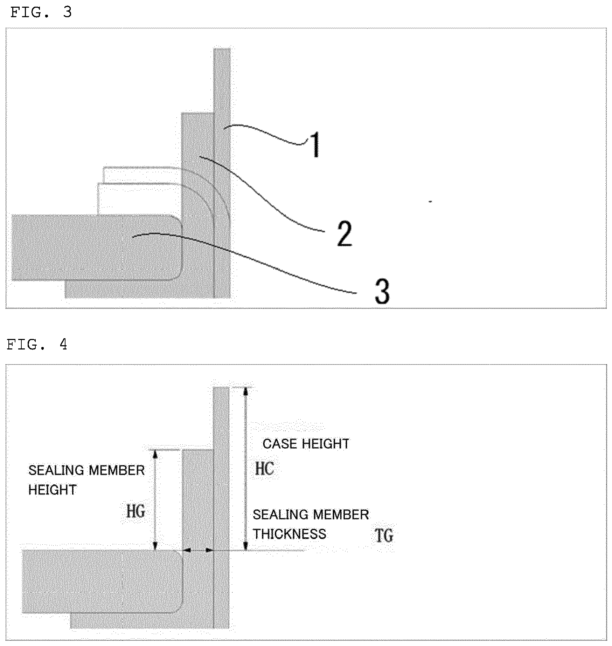

This disclosure will be described in detail below.
In a cylindrical lithium-ion battery, battery members are present inside a metal case and electrodes are present at end portions. Figure 1 shows the shape of this battery. A cap, which serves as a terminal for supplying electricity to outside, is required to be electrically insulated from the metal case.
To be able to thus insulate the case and the cap from each other, a sealing member is used at the end portion as is well known. The sealing member of this disclosure is used for such a purpose.
In the state shown in Figure 1, the sealing member and the cap are placed on the battery case.
Producing a cylindrical lithium-ion battery involves pressure-bonding an end portion thereof as shown in Figure 2. In this case, a metal case 1 and a sealing member 2 are bent along an end portion of a cap 3 as shown in Figure 3.
Thus bending the sealing member places high stress on the bent part, and this stress causes the sealing member to break. As such stress depends on the shape of the sealing member, it is desirable to shape the sealing member so as to be less prone to breakage. Further, electrical contact between the case and the cap needs to be avoided. Therefore, the sealing member needs to be shaped so as not to cause this problem while being pressure-bonded.
Moreover, to stably provide sealing by the sealing part, it is preferable that the metal case and the sealing member be in close contact with each other at the pressure-bonded part, with virtually no space between the metal case and the sealing member. If there is a space therebetween, the initial position of the sealing member relative to the case before pressure-bonding varies, which may unstabilize the position of the bending start point that is the root of the end portion of the sealing member. In addition, if the metal case and the sealing member are bent while not being in close contact with each other, the sealing member is pressed under a press-fitting load that is uneven, so that excessive stress may be placed on the bending start point of the sealing member. These conditions can be unfavorable as they increase the rate of damage occurring at the bending start point of the pressure-bonded part. However, even when there is a space between the metal case and the sealing member, the sealing part of this disclosure can be used as a sealing member having strength for practical use as long as it has the above-described specific properties of this disclosure. Therefore, this disclosure does not exclude the case where there is such a space.
It is preferable that at the pressure-bonded part, the sealing member and the metal case be bent while remaining in contact with each other as shown in Figure 3 such that no gap is left also at the part where the sealing member and the metal case have been bent. From the viewpoint of preventing formation of such a gap, it is preferable to pressure-bond the sealing member so as to be bent at a substantially right angle, with the cap and the sealing member parallel to each other and no gap left also between the cap and the sealing member.
From these viewpoints, the relation between the shape of the sealing member and stress was studied by simulation, and based on this study, the relation between the shape of the sealing member and the case on one hand and stress on the bent part on the other hand was revealed. Further, also for the positional relation between the case and the cap at the time of pressure-bonding, a relative shape of the case with respect to the sealing member that can prevent the above-described problems was revealed. The sealing member of this disclosure is based on the finding of a suitable shape that combines these relations. That is, the sealing member has a shape that meets the above-described Expressions (1) to (3).

The significance of the above-described Expressions (1) to (3) of this disclosure will be described in detail below.

Definitions

Before Expressions (1) to (3) are described, X, Y, TG, HG, and HC in these expressions will be described.

HC represents an axial distance from a cap upper surface to a leading end portion in the case.

HG represents an axial distance from the cap upper surface to a leading end portion in the sealing member.

TG represents a thickness of the sealing member.

For these definitions, see also the depiction of Figure 4.

Caps often have a non-flat shape, such as a shape with a protrusion. In that case, the position of a point in the upper surface of the cap at which the cap contacts the sealing member is used as a reference.

The thickness TG is a radial thickness. That is, the sealing member has a cylindrical shape, and the radial width thereof corresponds to the thickness.

In the case where the sealing member is shaped so as to have a different thickness at a different position, the thickness of the sealing member at the cap upper surface is used as TG.

Based on TG, HG, and TG described above, X and Y are defined as follows:

$$X = TG / HG$$

$$Y = HG / HC$$

Expression (1)

A simulation analysis was conducted on the relation between maximum stress and X relative to various thicknesses TG. The maximum stress means stress on a portion of the sealing member that is found to be maximum by the simulation involving analyzing the stress placed on every portion of the entire sealing member. Such maximum stress was calculated while TG and X were varied.

For the simulation, the sealing member and the case both having an annular shape were used, and the cap had a circular shape. The material of the cap was regarded as a rigid body, because the material of a common cylindrical battery has sufficiently high rigidity relative to the sealing member. As the radial outside diameter of the cap upper surface, the dimension of close contact with the radial inside diameter of the sealing member was used, and the axial thickness of the cap was standardized to 1.0 mm as the dimension of a common cylindrical battery.

The simulation was conducted using ANSYS V19.0 under a condition where the sealing member and the case were pressed from the upper side toward the lower side in the radial direction between a rigid member having a radially spreading surface that mocks a pressure-bonding jig and the cap disposed on the upper side of the sealing member. Pressure was applied until the distance between a lower surface of the member mocking the pressure-bonding jig and the cap upper surface reached a distance combining the thickness TG of the sealing member before deformation and the thickness of the case before deformation.

Here, the material of the sealing member used for the simulation was a tetrafluoroethylene-perfluoroalkylvinylether copolymer (abbreviated as PFA), and particularly the physical values of Neoflon (R) PFA AP-201 were used. Here, the following physical values of PFA AP-201 as a material were used: an MFR as per ASTM D 3307 of 28g/10min, a tensile strength as per ASTM D 3307 of 32 MPa, a tensile elasticity of 390 MPa, and a Poisson ratio of 0.46.

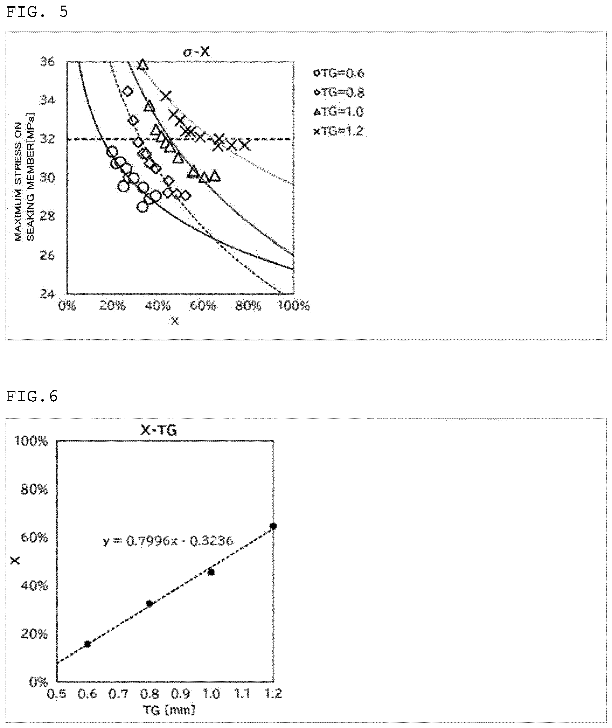

For these calculation results, maximum stresses and X were plotted. Then, a relational expression was created for each group of points that belonged to the same thickness TG. This is shown in Figure 5. As shown in Figure 5, correlations between the thickness TG on one hand and the maximum stress and X on the other hand was revealed by the simulation.

In this disclosure, perfluoropolymer is used as the material of the sealing member. Perfluoropolymer generally has a value of tensile strength equal to or higher than 32 MPa, albeit differences depending on the molecular weight of resin and the forming method.

Therefore, when the stress on the sealing member exceeds 32 MPa, the sealing member is likely to get damaged at that point.

On this basis, the value of X at which the maximum stress is 32 MPa can be read from Figure 5 for each thickness to be used as a limit value X for durability under the maximum stress 32 MPa.

The limit value X for durability under the maximum stress 32 MPa read from Figure 5 and the thickness TG were plotted, and the relation therebetween thus revealed is Figure 6.

The straight line in Figure 6 shows X = 0.800TG - 0.324.

Since the value X represented by this relational expression is the limit value X, the sealing member is less likely to get damaged when the following relational expression is met:

$$X > 0.800TG - 0.324 \quad (1)$$

It is more preferable that damage is less likely to occur also when the maximum stress is 30 MPa. That is, the maximum stress can decrease to about 30 MPa at some portions due to unevenness in forming etc.

To make damage less likely to occur also in such a case, a value obtained by performing the above-described calculation process for the case where the maximum stress is 30 MPa may be used.

More specifically, the relational expression may be:

$$X > 1.074TG - 0.411 \quad (1\text{-}a)$$

Further, it is more preferable that damage is less likely to occur also when the maximum stress is 28 MPa. That is, the maximum stress can decrease to about 28 MPa at some portions due to unevenness in forming etc.

To make damage less likely to occur also in such a case, a value obtained by performing the above-described calculation process for the case where the maximum stress is 28 MPa may be used.

More specifically, the relational expression may be:

$$X > 0.417TG + 0.222 \quad (1\text{-}b)$$

Expression (2)

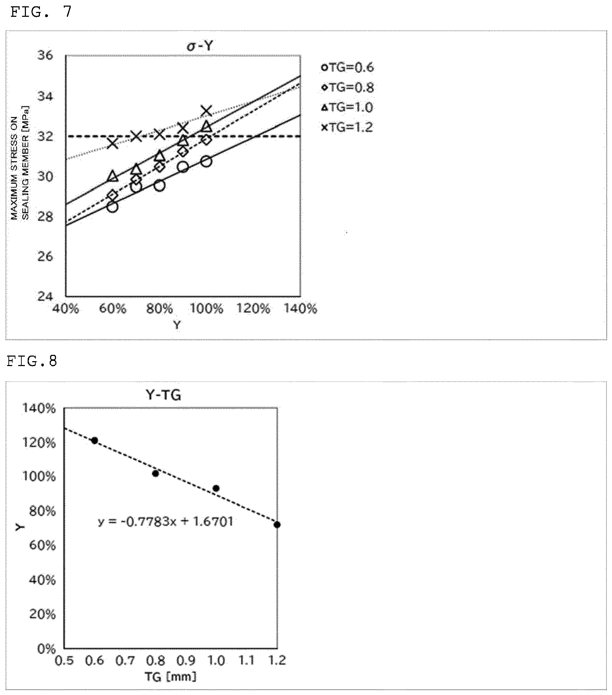

A simulation analysis was conducted on the relation between the maximum stress and Y relative to various thicknesses TG. The maximum stress means stress on a portion of the sealing member that is found to be maximum by the simulation involving analyzing the stress placed on every portion of the entire sealing member. Such maximum stress was calculated while TG and Y were varied. For these calculation results, maximum stresses and Y were plotted. Then, a relational expression was created for each group of points that belonged to the same thickness TG. As shown in Figure 7, correlations between the thickness TG on one hand and the maximum stress and Y on the other hand were revealed.

In this disclosure, perfluoropolymer is used as the material of the sealing member. Perfluoropolymer generally has a value of tensile strength of about 32 MPa.

Therefore, when the stress on the sealing member reaches a value exceeding 32 MPa, the sealing member is likely to get damaged at that point.

On this basis, the value of Y at which the maximum stress is 32 MPa can be read from Figure 7 for each thickness to be used as a limit value Y for durability under the maximum stress 32 MPa.

The limit value Y for durability under the maximum stress 32 MPa read from Figure 7 and the thickness TG were plotted, and the relation therebetween thus revealed is Figure 8.

The straight line in Figure 8 shows Y = -0.778TG + 1.670.

Since the value Y represented by this relational expression is the limit value Y, the sealing member is less likely to get damaged when the following relational expression is met:

$$Y < -0.778TG + 1.670 \quad (2)$$

It is more preferable that damage is less likely to occur also when the maximum stress is 30 MPa. That is, the maximum stress can decrease to about 30 MPa at some portions due to unevenness in forming etc.

To make damage less likely to occur also in such a case, a value obtained by performing the above-described calculation process for the case where the maximum stress is 30 MPa may be used.

More specifically, the relational expression may be:

$$Y < -1.075TG + 1.557 \quad (2\text{-}a)$$

Further, it is more preferable that damage is less likely to occur also when the maximum stress is 28 MPa. That is, the maximum stress can decrease to about 28 MPa at some portions due to unevenness in forming etc.

To make damage less likely to occur also in such a case, a value obtained by performing the above-described calculation process for the case where the maximum stress is 28 MPa may be used.

More specifically, the relational expression may be:

$$Y < -0.442TG + 0.762 \quad (2-b)$$

Expression (3)

The sealing member of this disclosure needs to be such that when the sealing member and the end portion of the case are bent for pressure-bonding, the leading end of the case does not contact the upper part of the cap. Since the case and the cap are required not to be electrically coupled together as described above, dimensions need to be restricted so as to prevent contact at the end portion.

More specifically, as a state after pressure-bonding, a state of configuration will be considered in which the cap upper surface and the sealing member inner surface are in a positional relation of being in close contact with each other, and moreover the case inner surface and the sealing member outer surface are in a positional relation of being in close contact with each other, and the leading end portion of the case bends from an upper part of the leading end of the sealing member as a bending start point and the leading end portion of the case positively contacts the cap upper surface. Thus, in this state, at the contact surfaces of the sealing member and the case, a total of the sealing member height and the sealing member thickness matches the case height. From this state, based on the lower limit of the thickness of the sealing member being 0.5 mm due to the forming limit of perfluoropolymer, the sealing member height HG and the case height HC from a bending neutral surface of the sealing member and a bending neutral surface of the case, respectively, in an initial state that are bent and developed dimensions before pressure-bonding were calculated. The results were substituted by the dimensional ratios X and Y, and further a relational expression of Y with respect to X was approximated by a second-order polynomial curve to obtain the following expression:

$$Y = 0.594X^2 - 1.176X + 0.913$$

Since the value Y represented by this relational expression is the limit value Y below which the leading end portion of the case positively contacts the cap upper surface and is electrically coupled thereto, the condition for the numerical values on the left side and the right side of this expression to match is met, and contact between the case and the cap does not occur, when the following relational expression is met:

$$Y > 0.594X^2 - 1.176X + 0.913 \quad (3)$$

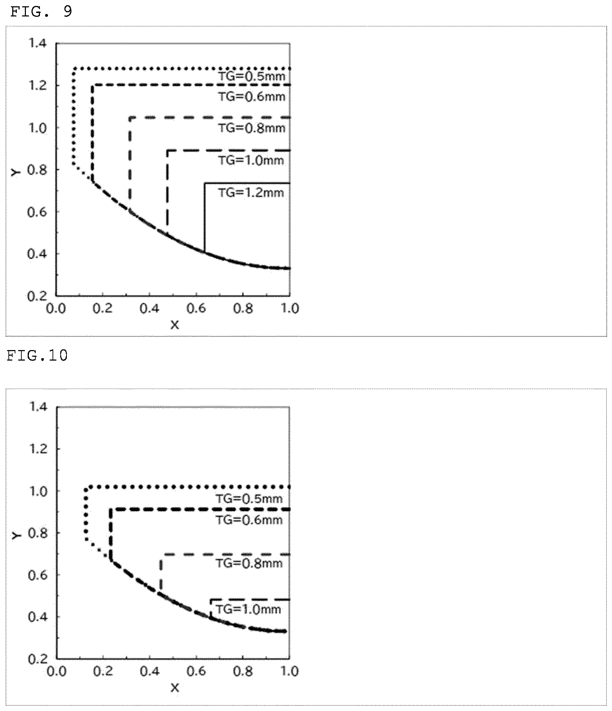

Figure 9 shows ranges that meet the above-described relations (1) to (3). Since the ranges are different for different thicknesses TG, Figure 9 shows ranges of X and Y to be met within a range of TG from 0.5 to 1.2. In the graph of Figure 9, each range surrounded by two straight lines and one curved line is a range that the sealing member of this disclosure should meet, and a sealing member having a shape within the range corresponds to the sealing member of this disclosure.

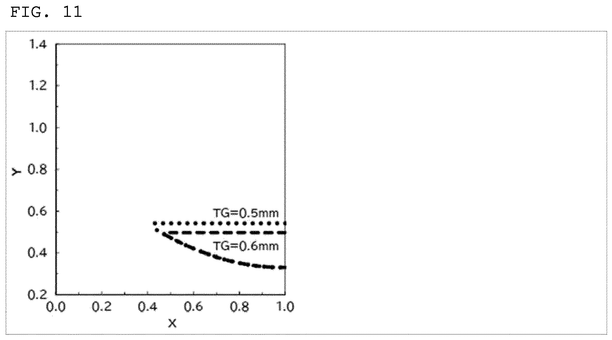

Further, Figure 10 shows suitable ranges shown by Expressions (1-a), (2-a), and (3) calculated for the case where the maximum stress is 30 MPa. In addition, Figure 11 shows suitable ranges shown by Expressions (1-b), (2-b), and (3) calculated for the case where the maximum stress is 28 MPa.

Conventional sealing members are not designed based on study on a suitable shape that is less prone to breakage. The sealing member having the specific shape revealed by the simulation analyses of the present inventors has a shape optimized by conducting such study. Therefore, it can achieve a significant reduction in the probability of getting damaged, thereby contributing to improving the production yield.

In the following, the sealing member of this disclosure having been described above and a cylindrical lithium-ion battery using this sealing member will be described in detail.

The lithium-ion battery of this disclosure is not limited and an arbitrary one can be used. The bottom-closed cylindrical case in this disclosure is not limited in its size, and an arbitrary one having a common size of a battery can be used. In particular, for example, a bottom-closed cylindrical case within a range of 15 to 30 mm in diameter and a range of 40 to 100 mm in height can be used, and preferably one within a range of 18 to 25 mm in diameter and up to 80 mm in height can be used.

The bottom-closed cylindrical case is not limited in its material, and a common material, such as a steel plate or an aluminum plate, can be used. The cap is also not limited in its material, and a common material, such as a steel plate or an aluminum plate, can be used.

The sealing member of this disclosure is made of perfluoropolymer.

A lithium-ion battery representing sealed batteries uses an organic electrolytic solution. As this organic electrolytic solution may catch fire when it leaks out of the battery and there is an inflammable object nearby, it is necessary to seal the battery. In addition, sealed batteries are required to maintain their expected performance in their service environment, which makes it necessary to retain the sealing performance until the end stage of their service life in their normal service environment.

At the sealed part of the cylindrical battery, the leading end of the sealing member is bent and deformed inward along with the case and thus pressure-bonded such that the sealing member between the case and the cap is pressed, i.e., the sealing member is compressed, and thereby a sealing configuration combining a sealing property and an insulation property is established. In this sealing configuration, sealing performance is realized by a repulsive force that the compressed sealing member exerts while deforming elastically in a state where a surface of the compressed sealing member after being pressure-bonded and a surface of a compressing member are in close contact with each other. Therefore, the sealing member is preferably one that deforms flexibly so as to be parallel to the surface of the compressing member. In addition, the sealing member is preferably one that is less prone to breakage under high stress placed on the bent part during pressure-bonding.

From these viewpoints, perfluoropolymer that is a relatively soft resin is preferable as the material of the sealing member. Examples are PFA and fluoroethylene propylene resin (FEP). Of these, PFA is preferable. PAVE in PFA has preferably 1-6C alkyl group, and perfluoromethylvinylether (PMVE), perfluoroethylvinylether (PEVE), or perfluoropropylvinylether (PPVE) is more preferable. PFA has a melting point as per ASTM D 4591 of 250°C or higher but not higher than 320°C. In particular, from the viewpoint of heat resistance, the melting point is preferably 290°C or higher and more preferably 300°C or higher. PFA has an MFR as per ASTM D 3307 of 5g/10min or higher but not higher than 80g/10min. In particular, from the viewpoint of the ease of forming, the MFR is preferably 7 or higher, more preferably 10 or higher, further preferably 15 or higher, and further preferably 25 or higher. The perfluoropolymer may contain various additives and the like within such a range that the physical properties of the perfluoropolymer are not adversely influenced.

The sealing member of this disclosure is not limited in its manufacturing method, and can be produced by a widely known common manufacturing method, such as injection molding.

Also disclosed herein is a cylindrical lithium-ion battery that has a structure in which the above-described sealing member is used by being interposed between the bottom-closed cylindrical case and the cap and pressure-bonded by being bent at the upper end of the case. Such a cylindrical lithium-ion battery can be manufactured by a widely known method.

If a gap is left at the pressure-bonded part, between the sealing member and the case or between the sealing member and the cap, the initial position of the sealing member relative to the case before pressure-bonding varies, which unstabilizes the position of the bending start point that is the root of the end portion of the sealing member. Further, if the metal case and the sealing member are bent while not being in close contact with each other, the sealing member is pressed under a press-fitting load that is uneven. This is unfavorable because excessive stress may be placed on the bending start point of the sealing member and the rate of damage occurring at the bending start point in the pressure-bonded part may increase. In the lithium-ion battery produced using the sealing member of this disclosure, therefore, it is preferable that there be virtually no such space and that the sealing member and the case, as well as the sealing member and the cap, be in close contact with each other, without a space therebetween.

Industrial Applicability

The sealing member of this disclosure can be suitably used in a cylindrical lithium-ion battery.

Reference Signs List

1    Metal case
2    Sealing member
3    Cap

**Claims**

1.  A sealing member used for a cylindrical lithium-ion battery, wherein the sealing member is used by being interposed between a bottom-closed cylindrical case and a cap, is made of perfluoropolymer, and has dimensions that meet the following relational expressions:

when an axial distance from a cap upper surface to a leading end portion in a case is defined as HC,
an axial distance from the cap upper surface to a leading end portion in the sealing member is defined as HG,
a thickness of the sealing member is defined as TG,
a value of TG divided by HG is defined as X (=TG/HG), and
a value of HG divided by HC is defined as Y (=HG/HC),

$$X > 0.800TG - 0.324 \quad (1)$$

$$Y < -0.778TG + 1.670 \quad (2)$$

$$Y > 0.594X^2 - 1.176X + 0.913 \quad (3).$$

2. The sealing member according to claim 1, wherein the perfluoropolymer has a tensile strength equal to or higher than 32 MPa.

3. A cylindrical lithium-ion battery having a structure in which the sealing member according to claim 1 or 2 is used by being interposed between a bottom-closed cylindrical case and a cap and pressure-bonded by being bent at an upper end of the case.

FIG.1

FIG.2

FIG. 3

FIG. 4

SEALING MEMBER HEIGHT HG

CASE HEIGHT HC

SEALING MEMBER THICKNESS TG

FIG. 5

FIG.6

FIG. 7

FIG.8

FIG. 9

FIG.10

FIG. 11

<table>
<tr><td colspan="2" align="center">INTERNATIONAL SEARCH REPORT</td><td colspan="2">International application No.<br>PCT/JP2021/022452</td></tr>
</table>

A. CLASSIFICATION OF SUBJECT MATTER
Int. Cl. F16J15/10(2006.01)i, H01M50/107(2021.01)i, H01M50/184(2021.01)i,
H01M50/19(2021.01)i
FI: H01M50/184 D, F16J15/10 X, H01M50/19, H01M50/107
According to International Patent Classification (IPC) or to both national classification and IPC

B. FIELDS SEARCHED

Minimum documentation searched (classification system followed by classification symbols)
Int. Cl. F16J15/10, H01M50/107, H01M50/184, H01M50/19

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2019/163440 A1 (SANYO ELECTRIC CO., LTD.) 29 | 1, 3 |
| Y | August 2019 (2019-08-29), paragraphs [0031], | 2-3 |
|   | [0032], [0038], [0044] | |
| Y | JP 2015-178899 A (DAIKIN INDUSTRIES, LTD.) 08 | 2-3 |
|   | October 2015 (2015-10-08), paragraph [0050] | |
| A | JP 2020-74290 A (PANASONIC INTELLECTUAL PROPERTY | 1-3 |
|   | MANAGEMENT CO., LTD.) 14 May 2020 (2020-05-14), | |
|   | fig. 1, 2, paragraphs [0021]-[0031] | |
| A | JP 10-302737 A (FUJI FILM SELLTEC KK) 13 November | 1-3 |
|   | 1998 (1998-11-13), fig. 1-3, paragraphs [0017]- | |
|   | [0021] | |

☐ Further documents are listed in the continuation of Box C.      ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>11.08.2021 | Date of mailing of the international search report<br>24.08.2021 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

**INTERNATIONAL SEARCH REPORT**
Information on patent family members

International application No.

PCT/JP2021/022452

| Patent Documents referred to in the Report | Publication Date | Patent Family | Publication Date |
|---|---|---|---|
| WO 2019/163440 A1 | 29.08.2019 | (Family: none) | |
| JP 2015-178899 A | 08.10.2015 | WO 2015/129866 A1<br>KR 10-2016-0119202 A<br>CN 106068413 A | |
| JP 2020-74290 A | 14.05.2020 | US 2017/0084947 A1<br>fig. 1, 2, paragraphs<br>[0024]-[0033]<br>WO 2016/013149 A1<br>CN 106463654 A | |
| JP 10-302737 A | 13.11.1998 | US 6025091 A<br>fig. 1-3, column 3,<br>lines 1-54 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010282824 A
- JP 2001028259 A
- JP 2014524118 W
- JP 2001313011 A